Europäisches Patentamt

European Patent Office

Office européen des brevets

(19)

(11) Numéro de publication : **0 051 011**
**B1**

(12) FASCICULE DE BREVET EUROPÉEN

(45) Date de publication du fascicule du brevet :
07.08.85

(51) Int. Cl.⁴ : **G 01 K  1/08, G 01 K  1/14**

(21) Numéro de dépôt : **81401590.5**

(22) Date de dépôt : **14.10.81**

(54) **Canne pyrométrique.**

(30) Priorité : **14.10.80 FR 8021903**

(43) Date de publication de la demande :
**05.05.82 Bulletin 82/18**

(45) Mention de la délivrance du brevet :
**07.08.85 Bulletin 85/32**

(84) Etats contractants désignés :
**CH DE FR GB IT LI NL SE**

(56) Documents cités :
**DE-B- 1 133 914**
**DE-C-  959 857**
**FR-A- 1 327 138**
**FR-A- 1 423 845**
**FR-A- 1 563 241**
**FR-A- 2 333 228**
**US-A- 3 923 552**
**US-A- 3 960 604**

(73) Titulaire : **SAINT-GOBAIN EMBALLAGE**
**2 place de la Libération**
**F-92306 Levallois-Perret (FR)**

(72) Inventeur : **Brax, Jean Albert**
**27 rue de Lattre de Tassigny**
**F-71100 Chalon-Sur-Saône (FR)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

## Description

L'invention concerne une canne pyrométrique telle que décrite dans le préambule de la revendication 1.

Dans la fabrication d'articles en verre, il est important de connaître en permanence la température régnant en divers points du verre en fusion et notamment dans le canal entre la sortie du four d'élaboration du verre et le poste de formage des articles.

Les cannes pyrométriques connues sont constituées généralement d'un corps en matériau réfractaire contenant un thermocouple, le corps étant protégé, sur toute sa longueur, de l'environnement agressif constitué par le verre en fusion et l'atmosphère surplombant le bain, par une longue gaine en céramique ou en métal réfractaire, en pratique du platine ou un alliage de platine. Généralement, cette gaine est fixée dans une zone relativement froide ce qui oblige à lui donner une longueur de l'ordre de 60 cm à 1 m et elle est donc d'un coût très élevé.

On connaît encore d'après la publication de brevet français FR-A-1 563 241 un dispositif thermométrique pour four à vide. Ce dispositif comprend une gaine en oxyde céramique entourée dans sa partie inférieure par une autre gaine en molybdène et dans sa partie supérieure par un tube en cuivre.

L'invention propose une canne pyrométrique pour la mesure des températures du verre en fusion présentant une résistance à la corrosion quasi illimitée dans le temps tout en étant particulièrement économique.

La canne pyrométrique selon l'invention comprend des pièces métalliques, au moins un couple thermoélectrique pour la mesure des températures du verre en fusion, une tige en matériau réfractaire contenant le ou les couple(s) thermoélectrique(s) et munie d'un embout de faible longueur, en métal ou en alliage métallique résistant chimiquement et mécaniquement à l'action du verre et de l'atmosphère surplombant le bain, cette canne pyrométrique étant caractérisée en ce que ledit embout métallique est monté directement sur ladite tige et est surmonté d'une entretoise en matériau réfractaire l'isolant thermiquement des autres pièces métalliques appartenant à la canne pyrométrique.

Sous un des aspects de l'invention, l'embout en platine ou en alliage de platine, de courte longueur, est surmonté par une entretoise en matériau réfractaire telle qu'un tube en sillimanite, cette entretoise étant poussée par un moyen élastique de rappel tel un ressort, pour être appliquée sur le fond d'un support tubulaire formant un puits descendant au voisinage immédiat du verre, ledit support étant en réfractaire, tel la sillimanite et appartenant à la canne pyrométrique ou à une pièce intermédiaire servant au fonctionnement de la canne.

La canne selon l'invention forme un ensemble rigide facile à monter et à démonter en bloc car il est exempt de moyens de fixation particuliers tels que des goupilles ou des colliers de serrage.

Suivant un aspect avantageux de l'invention, la canne pyrométrique comprend plusieurs couples thermoélectriques associés de manière que leurs soudures chaudes soient situées à des niveaux différents ; elle permet ainsi d'obtenir simultanément plusieurs relevés de températures étagés sur toute la hauteur du bain.

D'autres avantages et caractéristiques de l'invention apparaîtront dans la description qui suit, illustrée par les figures jointes.

La figure 1 est une coupe en élévation d'une canne pyrométrique selon l'invention, en position de mesure au dessus d'un canal de verre en fusion.

La figure 2 est une coupe longitudinale de l'extrémité de la canne pyrométrique.

La figure 3 est une coupe radiale selon III-III de la figure 2.

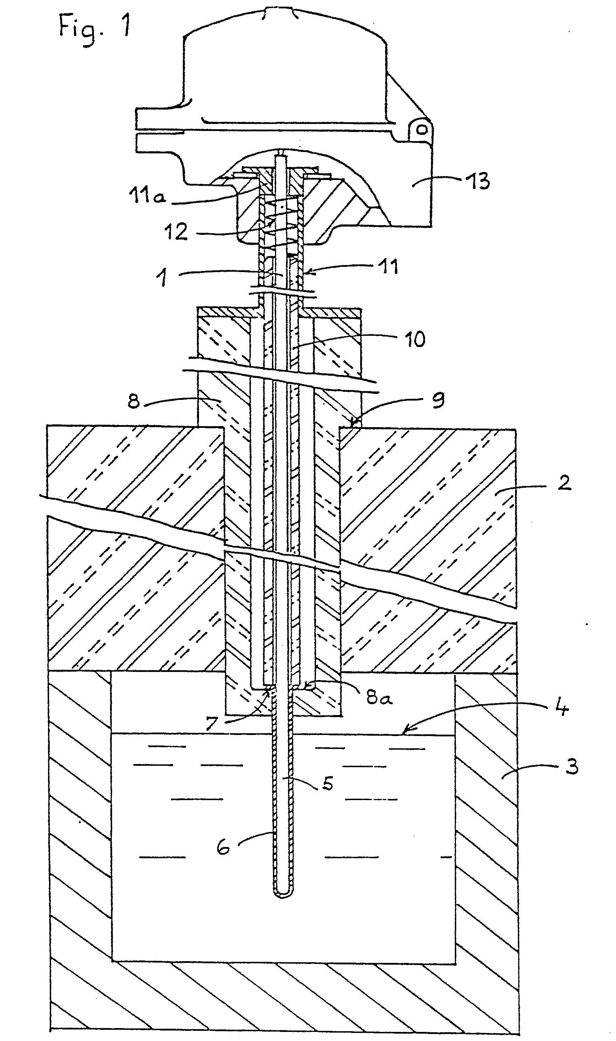

La figure 1 montre la canne pyrométrique 1 passant au travers de la voûte en matériau réfractaire 2 d'un canal délimité par un bloc réfractaire 3 au sein duquel circule du verre en fusion dont le niveau est figuré en 4.

La canne pyrométrique est formée d'une tige formée d'un tube borgne 5 en matériau réfractaire tel l'alumine contenant un ou plusieurs thermocouples comme décrit par la suite. L'extrémité inférieure de la tige est protégée par un embout 6 en platine rhodié à 10 %, résistant chimiquement et mécaniquement aux actions du verre en fusion et de l'atmosphère surplombant le bain. La tige 5 s'insère à frottement doux dans l'embout 6. Cet embout de faible longueur, (cette longueur étant fonction de la hauteur du verre généralement d'une vingtaine de cm de long pour une canne mesurant les températures dans un canal à la sortie du four d'élaboration du verre) en forme de doigt de gant, possède une collerette 7 qui sert de butée de positionnement.

La tige 5 et son embout 6 passent au travers d'un orifice ménagé à la base d'un support tubulaire rectifié en réfractaire 8, appartenant à la canne. Ce support 8, logé dans une ouverture pratiquée dans la voûte 2, prend appui sur la face supérieure de cette voûte au moyen d'un épaulement 9. Il forme un puits dont le fond 8a se trouve très près, de l'ordre de quelques centimètres de la surface du verre.

La tige 5 et l'embout 6 sont maintenus en place par un tube entretoise 10 en matériau réfractaire dont la partie supérieure est insérée dans une rehausse 11 constituée d'un tube métallique, en acier inoxydable par exemple, et bloquée par un ressort 12 en appui sur son couvercle 11a. Sous l'action de ce ressort, l'extrémité inférieure du tube entretoise vient plaquer la collerette 7 de l'embout 6 sur le fond rectifié du puits du support 8.

La partie supérieure de la canne est constituée par la tête de mesure 13. On obtient ainsi un ensemble rigide, monté par simple emboîtement sans autres moyens de fixation tels que des goupilles ou des colliers de serrage, et facile à monter et à démonter.

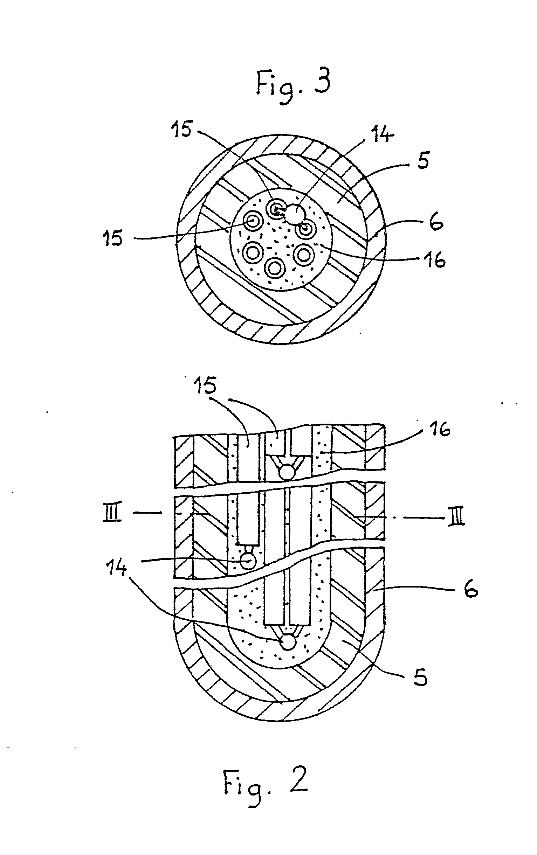

Les figures 2 et 3 montrent la disposition des éléments constitutifs de la canne pyrométrique et notamment l'emplacement des thermocouples. Les différentes soudures chaudes 14 sortent à la partie inférieure des gaines capillaires en réfractaire 15, isolant les fils des thermocouples. Ces gaines capillaires 15, généralement en alumine, sont réunies les unes aux autres de façon que les soudures chaudes 14 soient espacées le long de l'axe longitudinal de la canne pyrométrique et que leur écartement demeure constant.

On peut par exemple les réunir dans une forme en les noyant dans un mélange de silicate de soude et de poudre de silice qui joue le rôle de ciment 16.

L'ensemble des thermocouples ainsi assemblés est introduit dans la tige 5. La canne est enfin enfilée dans l'embout métallique 6 et placée dans le support 8 en vue de sa mise en place dans le four ou le canal.

Un exemple de canne pyrométrique selon l'invention comprend trois thermocouples en platine rhodié à 30 % et 6 % de rhodium, dont les fils sont isolés par des capillaires en alumine fournis par la Société DEGUSSA.

En position de mesure, les trois soudures chaudes sont disposées respectivement juste au dessous de la surface libre du bain de verre, au milieu du courant de verre et près de la sole.

L'embout métallique a une épaisseur de l'ordre du millimètre alors que la tige en réfractaire a une épaisseur de l'ordre de 2 millimètres.

Cette structure procure une rigidité suffisante pour éviter les déformations susceptibles d'être provoquées par un écoulement rapide du verre.

### Revendications

1. Canne pyrométrique comportant des pièces métalliques, au moins un couple thermoélectrique pour la mesure des températures du verre en fusion, une tige (5) contenant le ou les couple(s) thermoélectrique(s) (14) et munie d'un embout (6) de faible longueur, en métal ou en alliage métallique résistant chimiquement et mécaniquement à l'action du verre et de l'atmosphère surplombant le bain, caractérisée en ce que ledit embout métallique (6) est monté directement sur ladite tige (5) et est surmonté d'une entretoise (10) en matériau réfractaire l'isolant thermiquement des autres pièces métalliques appartenant à la canne pyrométrique.

2. Canne pyrométrique selon la revendication 1, caractérisée en ce que l'embout est en platine ou en alliage de platine tel le platine rhodié à 10 % et est surmonté par l'entretoise (10) en matériau réfractaire tel la sillimanite, l'alumine, ladite entretoise (10) étant poussée par un moyen élastique de rappel (12), susceptible de l'appliquer sur le fond (8a) d'un support tubulaire (8), en réfractaire, appartenant à la canne ou à une pièce intermédiaire servant au fonctionnement de cette canne, ledit support tubulaire (8) formant un puits.

3. Canne pyrométrique selon la revendication 2, caractérisée en ce que le support tubulaire (8) est un sillimanite.

4. Canne pyrométrique selon une des revendications 2 ou 3, caractérisée en ce que l'embout métallique (6) est muni d'une collerette (7), cette dernière étant plaquée sur le fond du support tubulaire (8) par l'entretoise (10).

5. Canne pyrométrique selon une des revendications 1 à 4, caractérisée en ce qu'elle contient plusieurs couples thermoélectriques (14) associés, disposés à des niveaux différents dans des gaines (15) espacées dans la tige (5).

6. Canne pyrométrique selon la revendication 5, caractérisée en ce que les gaines (15) des thermocouples (14) sont noyés dans un ciment (16).

7. Canne pyrométrique selon une des revendications 1 à 6, caractérisée en ce que la tige (5) s'insère à frottement doux dans l'embout (6).

### Claims

1. A pyrometer comprising metal members, at least one thermoelectric couple for measuring the temperature of glass during fusion, a rod (5) containing the thermoelectric couple or couples (14) provided with tip (6) of small length, of metal or metal alloy which is chemically and mechanically resistant to the action of glass and of the atmosphere above the bath, characterised in that said metal tip (6) is mounted directly on said rod (5) and is surmonted by a spacer (10) of refractory material which insulates it thermally from other metal members of the pyrometer.

2. Pyrometer according to claim 1, characterised in that the tip is of platinum or a platinum alloy such as platinum- 10 % rhodium and is surmounted by the spacer (10) of refractory material such as sillimanite or alumina, said spacer (10) being urged by a resilient return means (12) and capable of bearing on the bottom (8a) of a refractory tubular support (8) forming part of the pyrometer, or on an intermediate member used in operation of the pyrometer, said tubular support (8) forming a bore.

3. Pyrometer according to claim 2, characterised in that the tubular support (8) is of sillimanite.

4. Pyrometer according to one of claims 2 and 3, characterised in that the metal tip (6) is provided with a collar (7), the latter being applied on to the bottom of the tubular support (8) by the spacer (10).

5. Pyrometer according to one of claims 1 to 4, characterised in that it contains a plurality of associated thermoelectric couples (14), arranged at different levels in sheaths (15) spaced in the rod (5).

6. Pyrometer according to claim 5, characterised in that the sheaths (15) of the thermocouples (14) are embedded in a cement (16).

7. Pyrometer according to one of claims 1 to 6, characterised in that the rod (5) is inserted with a loose fit in the tip (6).

## Patentansprüche

1. Einstichpyrometer aus metallischen Teilen, mit mindestens einem Thermoelement zur Temperaturmessung einer Glasschmelze, einem das oder die Thermoelemente (14) enthaltenden und mit einem Aufsatz (6) geringer Länge versehenen Schaft aus Metall oder einer Metall-Legierung, welches bzw. welche chemisch und mechanisch gegenüber dem Glas und der Atmosphäre oberhalb des Bades beständig ist, dadurch gekennzeichnet, daß der metallische Aufsatz (6) unmittelbar auf dem Schaft (5) angeordnet und von einer Hülse (10) aus hitzebeständigem Material überlagert ist, welche ihn thermisch gegenüber den anderen Metallteilen des Einstichpyrometers isoliert.

2. Einstichpyrometer nach Anspruch 1, dadurch gekennzeichnet, daß der Aufsatz aus Platin oder einer Platinlegierung, wie etwa einem bis 10 % rhodiniertem Platin, gebildet ist und durch die Hülle (10) aus einem hitzebeständigen Material, wie Sillimanit und Aluminiumoxid überlagert ist, wobei die Hülle (10) durch eine elastische Rückstelleinrichtung (12) beaufschlagt ist, die die Hülle gegen den Boden (8a) eines rohrförmigen Stützteils (8) aus hitzebeständigem Material des Pyrometers oder eines Zwischenstücks drückt, welches zur Funktion dieses Pyrometers beiträgt, wobei das rohrförmige Stützglied (8) eine Bohrung begrenzt.

3. Einstichpyrometer nach Anspruch 2, dadurch gekennzeichnet, daß das rohrförmige Stützglied (8) aus einem Sillimanit gebildet ist.

4. Einstichpyrometer nach Anspruch 2 oder 3, dadurch gekennzeichnet, daß der metallische Aufsatz (6) mit einem Kragen (7) versehen ist, welcher auf dem Boden des rohrförmigen Stützglieds (8) durch die Hülle (10) aufgesetzt ist.

5. Einstichpyrometer nach einem der Ansprüche 1 bis 4, dadurch gekennzeichnet, daß das Pyrometer mehrere Thermoelemente (14) enthält, welche auf unterschiedlichen Niveaus in mit Abstand im Schaft (5) angeordneten Hülsen (15) angeordnet sind.

6. Einstichpyrometer nach Anspruch 5, dadurch gekennzeichnet, daß die Hülsen (15) der Thermoelemente (14) in Kitt (16) eingebettet sind.

7. Einstichpyrometer nach einem der Ansprüche 1 bis 6, dadurch gekennzeichnet, daß der Schaft (5) mit weicher Reibung in den Aufsatz (6) einführbar ist.

Fig. 1

0 051 011

11a
12
1
11
10
8
9
2
7
8a
4
3
5
6
13

1

Fig. 3

Fig. 2